# EUROPEAN PATENT SPECIFICATION

(11) **EP 4 368 931 B1**
(45) Date of publication and mention of the grant of the patent: **09.09.2026**
(21) Application number: 22736316.5
(22) Date of filing: 26.05.2022
(51) Int. Cl.: F28D 1/047, F28F 21/06, F24S 10/50, E04B 1/74, F28F 13/00

(54) **HEAT EXCHANGER**
WÄRMETAUSCHER
ÉCHANGEUR DE CHALEUR

(30) Priority: 09.07.2021 ES 202130648
(43) Date of publication of application: 15.05.2024
(73) Proprietor: Sunthalpy Engineering, S.l, 33011 Oviedo, Asturias (ES); Alintra Systems, S.l.u, Burgos (ES)
(72) Inventor: SUÁREZ ÁLVAREZ, Carlos Omar, 33011 Oviedo, Asturias (ES); DEL COSO LÓPEZ, Raúl, 33011 Oviedo, Asturias (ES); GONZÁLEZ SOLER, Clemente, 09200 Miranda de Ebro, Burgos (ES)
(74) Representative: Clarke, Modet y Cía., S.L.
(86) International application number: PCT/ES2022/070321
(87) International publication number: WO 2023/281136

(56) References cited:
- WO-A1-2021/074823
- FR-A1- 2 494 819
- GB-A- 2 474 544
- US-A1- 2008 044 621
- CEGLIA F ET AL: "Effect of layout and working fluid on heat transfer of polymeric shell and tube heat exchangers for small size geothermal ORC via 1-D numerical analysis", GEOTHERMICS, PERGAMON PRESS, GB, vol. 95, 19 April 2021 (2021-04-19), XP086675727, ISSN: 0375-6505, [retrieved on 20210419], DOI: 10.1016/J.GEOTHERMICS.2021.102118

## Description

### Field of the invention

The present invention belongs to the technical field of thermal energy collection and air conditioning, specifically to the structures intended for such collection and air conditioning, and their optimization to reduce energy losses, and specifically to the constructive structures that integrate low enthalpy and high performance energy systems for the collection of thermal energy and its use in air conditioning. The invention relates in particular to a heat exchanger for low enthalpy air conditioning and its application to buildings and any other enclosure of various sectors in which air conditioning is fundamental, such as automotive and other means of transport, data storage means, etc.

### Background of the invention

At present, there are various systems for collecting thermal energy and various systems for applying it to the air conditioning of buildings and other enclosures. In order to reduce the negative environmental effects of CO₂ emissions, measures and guidelines are being established to reduce energy consumption to almost zero.

Specifically, in the building sector, one of the directions taken is the implementation of high levels of insulation of the entire building envelope while eliminating thermal bridges and optimizing solar and internal gains, and additionally implementing mechanical ventilation with high-efficiency heat recovery. This is known as passive buildings.

Additionally, active systems are being developed, such as state-of-the-art solar thermal and photovoltaic collectors and the storage of sensible and latent thermal energy, which can cover the energy demand even in the most adverse weather conditions. In these cases, the thermal demand must be satisfied by renewable resources generated in or near the building itself.

WO2011018088A2 shows structures and components for thermal energy exchange in buildings, and relates to a system of tubes with fluid in walls, ceilings or floors of buildings for transporting and exchanging heat/cooling generated/stored in other parts of the building. The objective of this system is to increase comfort in the building with the lowest energy consumption and carbon footprint.

WO2014198742A1 and WO2016180999A1 refer to structures and components used in building construction, in which graphite, graphene, carbon nanotubes and other additives are added to concretes to increase their thermal conductivity and make thermal energy exchange in buildings more efficient.

Document EP3453985B1, whose holder is the applicant of the present application, shows a bioclimatic building with at least one solar energy collector system and a thermal distribution and emission system, formed by at least one tube coil for a heat transfer fluid inside a concrete layer composed of a mixture of cementitious binders and aggregates comprising a composition with silicon carbide with a grain size greater than 1 millimeter in at least 30% volume with respect to the total volume of concrete, and where the total volume of the composition comprising silicon carbide is at least 45% with respect to the total volume of concrete. This results in a radiative model with low enthalpy and high efficiency heat collection, emission and distribution, providing a self-sufficient and energy positive building virtually every day of the year. However, these buildings have a number of drawbacks, such as the high cost of the systems used (due to the high cost of SiC and the complexity of its installation), and high CO₂ emissions in the materials used (embedded CO₂) that prevent the mass deployment of this solution and the large-scale use that can contribute to the decarbonization of buildings and cities worldwide. Furthermore, it requires a large installation area as it is a radiant system and also has a high weight per square meter which makes it difficult to use in the renovation of buildings to convert them into energy-positive ones.

Document US2008/044621A1 discloses a heat exchanger according to the preamble of claim 1.

Furthermore, another drawback of current systems is that metal tube coils have limited outdoor durability, as they do not resist freezing, and also the low contact surface between the tubes and fins is a bottleneck that limits heat transfer between the tube and the air. These fins have a limited contact surface because welding and metal stamping is expensive. Due to their manufacture, they are costly elements, which limits their sizing and forces them to have high temperature differentials between the heat transfer fluid and the air, which would prevent low enthalpy. This problem could be solved by using castings that form the duct and integral fins to obtain the most radial flow possible, but this is a complex and very expensive solution with limited outdoor use.

The EU estimates that 40% of greenhouse gas emissions come from buildings and most of this (over 70%) is due to the thermal needs of these buildings (heating, DHW and cooling) and has set the target of having neutral buildings by 2050. Existing solutions to date all involve substantial improvements to the building enclosures and the implementation of active renewable systems. But with today's technology, and due to the disadvantages mentioned above, it is logistically and economically unfeasible to achieve the ambitious goal set.

It is therefore desirable a heat exchange system for thermal energy collection and air conditioning that provides air conditioning based on a low enthalpy heat exchange efficiently, with a minimum energy consumption, avoiding the drawbacks of the previous systems existing in the prior art.

### Description of the invention

The present invention solves the problems existing in the prior art by means of a heat exchanger according to claim 1.

Periodic cells refer to cells of any type of polygonal section repeated periodically, although those of hexagonal or honeycomb section predominate, to maximize the contact surface between the faces of the different cells. This structure allows multiplying the heat transfer area by 20 with respect to the same transfer section of the tube, balancing the difference between the convection of the water inside the tube and the convection of the air passing through the cells.

In particular, the periodic cells can be metallic (aluminum, steel, copper, etc.) or other materials with high thermal conductivity, such as beryllium oxide and graphite.

As for the arrangement and relative orientation of the fluid conduits, the periodic cells are oriented perpendicularly to the enclosing means in the case that these are plates, boxes or walls, i.e. with the polygonal section parallel to said plates, boxes or walls, while the coil tube that conducts the heat transfer fluid is oriented perpendicularly to said periodic cells, although other arrangements and configurations may be possible, for example, the coil tube arranged obliquely to the periodic cells, or also arranged countercurrent.

In the heat exchanger of the present invention, the coil tube is made of low-cost, high-strength thermoformable plastic. Being made of plastic, it solves the existing problems in the state-of-the-art coils of resilience due to contractions and expansions, freezing, overpressure, and also the previous problems of corrosion. Thus, the use of plastic material in the coil tube increases the resistance of the heat exchanger outdoors, since the plastic wall of the tube is capable of absorbing by elastic deformation the expansion caused by freezing of the heat transfer fluid.

The heat exchanger additionally features a binder mass enveloping the coil tube, the binder mass having aggregates of high thermal conductivity, which assumes that the composite material of the binder mass and the aggregates has a thermal conductivity of at least 4 W mK. This binder mass acts as an intermediate material, contacting the plastic coil tube and the periodic cells that conduct the air, and creates an evenly distributed radial heat flow that allows efficient heat exchange using the entire perimeter surface of the coil tube, such that its temperature is completely uniform throughout its mass (ΔT<0.3K). In the event that the fluid freezes in the coil tube and its wall does not absorb all the expansion (unlikely case), the tensile brittleness of the binder materials will, in the worst case, cause radial cracks to form so that the radial heat flow lines will not be cut and neither the temperature uniformity nor the efficiency to transmit heat radially will be lost.

In particular, the binder mass can be cement, resin, or a combination of both. Also in particular, the aggregates included in the binder mass can be silicon carbide (SiC), metals, graphite, graphene and combinations of some or all of them.

This high thermal conductivity binder mass counteracts the low thermal conductivity of the reduced plastic thickness of the coil tube wall by generating a uniform radial flow, which allows the heat exchanger of the present invention to work with low temperature differentials at a low enthalpy, despite the fact that plastic is a poor thermal conductor.

The heat exchanger formed by these elements creates a heat transfer system between the heat transfer fluid in the coil tube and the air flowing through the cells that is economical, robust and efficient because it is homogeneous (with almost no temperature gradients), it increases the contact area between the cells and the coil tube by several times (compared to existing fin-based systems) and the high thermal potential provided by the heat transfer fluid circulating in the coil tube to the air flowing through the cells due to the high thermal conductivity binder material envelope.

Moreover, taking into account that the binder mass with high thermal conductivity aggregates has a high cost, significant embedded CO₂ emissions and a high weight per square meter, by limiting its use to a few rails around the plastic coil tube, the amount used is reduced by more than 70% compared to that which could be used in the prior art. The remaining binder mass is replaced by the periodic cell structure which has a significantly lower cost, embedded emissions and weight. And above all, the contact surface area is multiplied to create a low enthalpy, high efficiency, resistant thermal energy emitter or collector, with much lower cost, weight and carbon footprint.

Compared with air-fluid exchangers made entirely of metal (both the tube for heat transfer fluid and the air ducts), the present invention and the use of the binder mass allows a larger exchange area between the coil tube and air cells which compensates for the lower conductivity of the plastic tube and has a lower cost than welding or stamping of large areas between the tube and the ducts.

Preferably, in the heat exchanger of the present invention the coil tube has an outer diameter of between 8-12 mm and a thickness of between 0.7-1.5 mm. This allows for high thermal transfer (more than 7 W per linear meter with a temperature difference between the two surfaces of 1 K). The reduced diameter means that the coil tube carries a relatively small volume of heat transfer fluid inside, which limits the amount of fluid expansion in the event of a possible freeze-up. This indicated thickness of the plastic coil tube would be able to absorb this expansion by limiting the load transmitted to the exterior. Thus, the heat transfer between the heat transfer fluid inside the coil tube and the air flowing through the periodic cells is kept high due to the small diameter and thickness of the plastic coil tube, and the high conductivity binder mass enveloping the entire outer surface of the coil tube in direct contact with a large surface of the periodic cell structure.

Depending on the particular applications or the different uses and locations where the heat exchanger is installed, the means of enclosure will be different.

According to a particular embodiment of the invention, the enclosing means will be formed by a first plate disposed on one side of the periodic cell structure, and a second plate disposed on the opposite side of the periodic cell structure.

According to different materializations of this previous embodiment, the first plate or skin is of low thickness, less than 2.5 mm, and can be made of a material of very high thermal conductivity, for heat exchangers used as indoor emitters for air conditioning of spaces by radiant floor, wall or ceiling heating. This implies the use of materials in the plate or skin with a thermal conductivity of at least 100 W/mK. Alternatively, the first plate can be made of a material with high light energy absorption and low emissivity, for outdoor solar thermal collectors, arranged on facades and roofs. This assumes a light energy absorption of at least 60% and a thermal emissivity of less than 0.2.

As for the second plate or skin, also of low thickness, less than 2.5 mm, it can be made of a material of high thermal conductivity (at least a conductivity of 25 W/mK), or low thermal conductivity (at most a conductivity of 0.5 W/mK) depending on whether or not it is in contact with a mass that can serve as a thermal energy accumulator.

In this embodiment, the heat transfer will be between the outer surfaces of the sandwich, outside the plates, and the system composed of the heat transfer fluid, the plastic coil tube and the high thermal conductivity binder mass envelope. This system can be used in radiant systems inside buildings (floor, ceiling or walls). In addition to the lower cost of the system components with respect to that described in the prior art document EP3453985B1, its installation on site (new or refurbishment) is also simplified, since in the case of the present invention it is only necessary to place the plates and the periodic cell structure on the ground, then insert the coil tube in rails made in the periodic cell structure, and finally add the binder mass around the coil tube and let it solidify. This avoids having to do the entire tube coil layout on site, as well as pouring concrete over the entire floor surface.

According to an alternative embodiment of the invention, the enclosing means are formed by a single first plate or skin disposed on one side of the periodic cell structure. On the opposite side of the periodic cell structure no plate is included, and instead the exchanger has a low conductivity mass filling inside the periodic cells, which means a conductivity of less than 0.5 W/mK.

According to another embodiment of the invention, the enclosing means are formed by an external box made of a material with a high conductivity, i.e. conductivity greater than 25 W/mK, arranged on each side of the periodic cell structure. Furthermore, in accordance with this embodiment of the invention, the heat exchanger features forced ventilation means for redirecting the air and circulating it multiple times through the periodic cells in proximity of different parts of the coil tube with the heat transfer fluid.

With this embodiment, a hybrid radiative-convective indoor heat exchanger is achieved. The purpose of forced ventilation is to increase the air flow in the cells and thus generate a greater heat exchange between the heat transfer fluid and the air volume. Therefore, these indoor air conditioning units will have a smaller surface area and size than the radiant emitter plates described in the previous embodiment, reducing their cost, weight and carbon footprint.

Therefore, the embodiment of the heat exchanger can be used for the air conditioning of transport systems (cars, trucks, trains or airplanes) by installing it on walls and roofs and connecting it to a heat pump to achieve efficient air conditioning with low weight. Working with low temperature differentials, the heat pump would operate with a very high coefficient of performance (COP) (>9), making it particularly suitable for transport systems with 100% electric propulsion where heating is a major source of energy consumption compared to fossil fuel-based engines that use waste heat from combustion.

Furthermore, due to its low surface area, weight, cost and CO₂ footprint, this heat exchanger embodiment can be used integrated into server racks for cooling with application in large data centers for cloud computing and storage.

Similarly, this embodiment can be used as a piece of furniture that covers freezers and refrigerators to efficiently dissipate the heat emitted by the condenser thereof, which usually works confined and with a limited heat dissipation capacity, thus drastically increasing its efficiency and reducing its power consumption.

According to another embodiment of the heat exchanger, the enclosing means consist of an outer wall transparent to solar radiation, arranged on one side of the periodic cell structure, which will be the one arranged towards the outside, to receive solar radiation, and an inner wall arranged on the opposite side of the periodic cell structure, configured to absorb the solar radiation that has passed through the transparent outer wall and has not been absorbed by the periodic cell structure and the binder mass during use.

With this embodiment, a hybrid radiative-convective external heat exchanger capable of working either as a solar thermal panel or as aerothermal energy is achieved. In case of sufficient direct solar radiation, this outdoor unit would work in solar thermal panel mode providing a heat transfer fluid at a higher temperature than the ambient temperature in the primary circuit of a water-water heat pump that would work with a high COP (>5). When the energy of the incident solar radiation on the exposed surface of this outdoor unit falls below the demand of the water-to-water heat pump, its function as a fan coil will be activated, introducing forced outer air, initiating the thermal contribution as an aerothermal system with the solar support that may exist even in conditions of diffuse radiation. What is achieved with this is a higher temperature in the primary return than that obtained with existing aerothermal systems.

In this embodiment of the invention, the periodic cell structure has a polished finish and dark coloration to provide selective absorption with low emissivity. The periodic cell structure with the coil tube and the binder mass will be contained in a body with a housing function that on its outer wall (wall facing the sun) will have a glass that allows the passage of solar radiation into the cells and generates a greenhouse effect. The depth of the cells will be greater than 25 mm with a cell side of less than 10 mm, so that except with total perpendicularity to the sun, solar radiation will always fall on the cells. The opposite side will be closed with an opaque inner wall, which could arrange photovoltaic cells to collect in the form of electrical energy the portion of incident light not absorbed by the periodic cell structure and the binder mass and therefore not transformed into heat.

For example, considering a water heat pump of 5 kW thermal power, in direct sun conditions with an incident radiation of 1000 W/m², a hybrid outdoor unit of 5m² would achieve a return of the primary at a higher temperature than the ambient. With a low enthalpy indoor emitter as described above operating with water in the secondary at less than 23°C, a COP of more than 5 is ensured with very affordable equipment costs. The same installation on a cloudy day with a diffuse radiation of 200 W/m², modulating the pump compressor could obtain a thermal production higher than 1000 W, with a COP still higher than 5.

The present invention solves the problems existing in the prior art regarding the high cost, weight, necessary surface, complexity of installation, resilience and embedded CO₂, and allows to obtain buildings (new or refurbished) in a simple way in which the investment in the low enthalpy air conditioning system has a quick economic return due to the savings in energy consumption. The improvement of the system involves transforming the existing radiative model of the prior art system described in EP3453985B1 to a mixed radiative-convective hybrid collection and emission system, maintaining the high heat transfer with low temperature differentials (and thus low enthalpy) of the system of EP3453985B1.

The present invention solves previous problems of cost, embedded CO₂, extension, strength and weight by opening the door to fluid-air heat exchange systems that can be employed in outdoor collectors and indoor emitters to enable all new construction and energy retrofits of buildings to become energy positive and zero CO₂ emitting which would eliminate one of the major contributions to climate change.

The system of prior art EP3453985B1 limited its scope of application to buildings with air conditioning systems. On the contrary, the present invention allows the implementation of low enthalpy air conditioning technology in the rest of the technical sectors where air conditioning is essential, such as automotive, trains, airplanes, ships or data centers by drastically reducing its weight and cost, facilitating its modularization and improving its resistance.

The present invention can be used both in outdoor systems (solar thermal collectors or outdoor units of fan heaters or air conditioners) and indoor systems (fan coils for heating or cooling buildings and systems).

### Brief description of the drawings

In the following, in order to facilitate the understanding of the invention, by way of illustration but not limitation, an embodiment of the invention will be described with reference to a series of figures.
Figure 1 shows schematically a side section view of a particular embodiment of the heat exchanger subject of the present invention, showing its main elements.
Figure 2 schematically shows a plan section view of the heat exchanger of Figure 1.
Figure 3 shows schematically a side section view of an alternative embodiment of the heat exchanger of the invention with a plate and a mass filler inside the periodic cells.
Figure 4 schematically shows a side section view of another embodiment of the heat exchanger in an indoor radiative-convective hybrid emitter arrangement.
Figure 5 shows schematically a side section view of another embodiment of the heat exchanger in an outdoor hybrid radiative-convective collector arrangement.

In these figures reference is made to a set of elements that are:
- 1.: coil tube
- 2.: heat transfer fluid
- 3.: binder mass
- 4.: periodic cells
- 5.: air
- 6.: first plate or skin of the enclosing means
- 7.: second plate or skin of the enclosure means
- 8.: mass filling
- 9.: external box
- 10.: exterior wall
- 11.: inner wall.

### Detailed description of the invention

The object of the present invention is a heat exchanger, intended for thermal energy collection and air conditioning.

As shown in the figures, the heat exchanger has at least one coil tube (1) for the internal circulation of a heat transfer fluid (2), which is generally a liquid. The coil tube (1) is housed inside a structure of periodic cells (4) that act as conduction for the air circulation (5) through its interior, so that the walls of the periodic cells (4) have a very high thermal conductivity, which conventionally means that the material of these cells has a thermal conductivity of at least 100 W/mK. Furthermore, the heat exchanger has enclosing means, which house the structure of periodic cells (4), forming a sandwich configuration.

Periodic cells (4) in this description refer to periodically repeated cells of any type of polygonal section, although those of hexagonal or honeycomb section predominate, for maximization of the contact surface between the faces of the different cells, as can be seen in the figures.

In particular, the periodic cells (4) can be metallic (aluminum, steel, copper, etc.) or other materials, provided they have very high thermal conductivity, greater than 100 W/mK, such as beryllium oxide and graphite.

As for the arrangement and relative orientation of the fluid conduits, the periodic cells (4) are oriented perpendicularly to the enclosing means in the case that these are plates (6,7), boxes (9) or walls (10,11), i.e. with the polygonal section parallel to said plates (6,7), boxes (9) or walls (10,11), while the coil tube (1) conducting the heat transfer fluid (2) is oriented perpendicularly to said periodic cells (4), as can be seen in the figures, although other arrangements and configurations may be possible, for example the coil tube (1) arranged obliquely to the periodic cells (4), or also arranged countercurrent.

In the heat exchanger of the present invention, the coil tube (1) is made of plastic, which increases its durability outdoors,

As can be seen in the figures, the heat exchanger additionally features a binder mass (3) enveloping the coil tube (1), and said binder mass (3) includes aggregates with high thermal conductivity, which assumes that the composite material of the binder mass (3) and the aggregates has a thermal conductivity of at least 4 W/mK. This binder mass (3) contacts the coil tube (1) and the periodic cells (4), which promotes efficient heat exchange using the entire perimeter surface of the coil tube.

In particular, the binder mass (3) can be made of cement, resin, or a combination of both. Also in particular, the aggregates included in the binder mass (3) can be silicon carbide (SiC), metals, graphite, graphene and combination thereof, provided that they meet the requirement of high thermal conductivity.

Preferably, the coil tube (1) of the heat exchanger of the present invention has an outer diameter of between 8-12 mm and a thickness of between 0.7-1.5 mm. This ensures that, depending on the particular applications, or the different uses and locations where the exchanger is installed, the means of enclosure will be different.

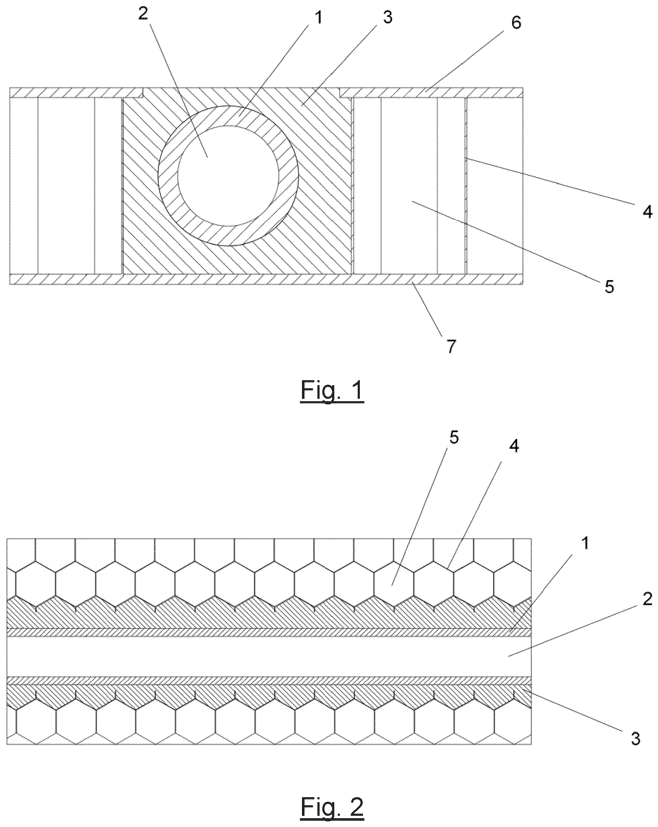

According to a particular embodiment of the invention shown in figure 1, the enclosing means will be formed by a first plate or skin (6) disposed on one side of the periodic cell structure (4), and a second plate or skin (7) disposed on the opposite side of the periodic cell structure (4).

According to different implementations of this previous embodiment, the first plate or skin (6) is of low thickness, less than 5 mm, and can be made of a material of high thermal conductivity, for heat exchangers of indoor emitters for air conditioning of spaces by radiant floor, wall or ceiling. This implies materials with a thermal conductivity of at least 25 W/mK. Alternatively, the first plate or skin (6) can be made of a material of high light energy absorption and low emissivity, for outdoor solar thermal collectors, arranged on facade and roof. This assumes a light energy absorption of at least 60% and a thermal emissivity of less than 0.2.

As for the second plate or skin (7), also of low thickness, it can be made of a material of high thermal conductivity (at least a conductivity of 25 W/mK), or low thermal conductivity (at most a conductivity of 0.5 W/mK) depending on whether or not it is in contact with a volume that can serve as a thermal energy accumulator.

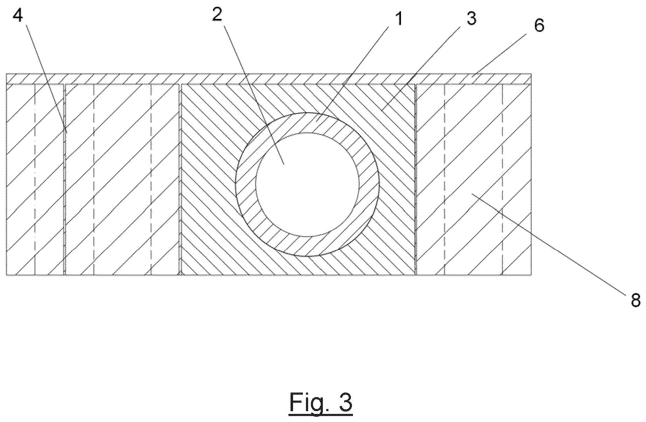

According to an alternative embodiment of the invention, depicted in figure 3, the enclosing means are formed by a single first plate or skin (6) disposed on one side of the periodic cell structure (4). On the opposite side of the periodic cell structure no plate is included, and instead the exchanger features a mass filler (8) of low thermal conductivity inside the periodic cells (4), which means a conductivity of less than 0.5 W/mK. This mass filler that provides rigidity to the structure and thermal insulation can be gypsum, plaster or similar, for integration in cladding or extradosed systems for use in walls.

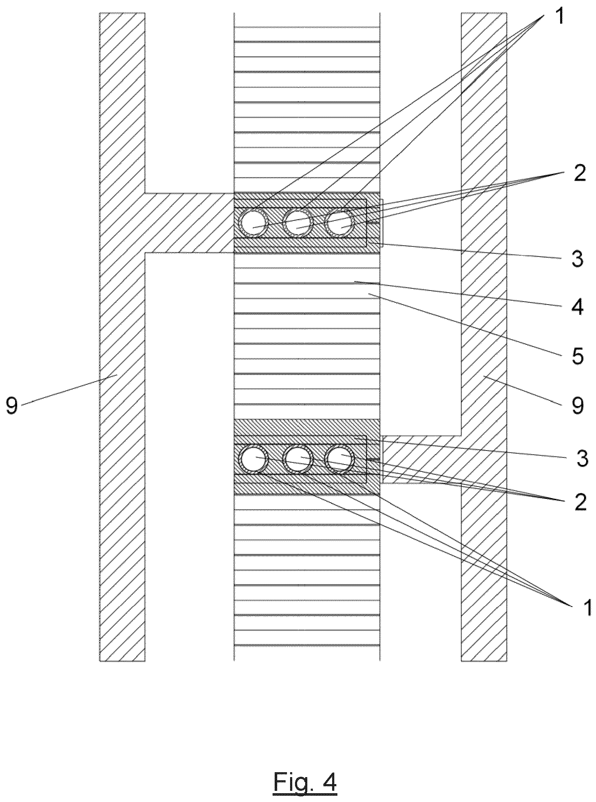

Figure 4 shows another embodiment of the invention, in which the enclosing means are formed by an external box (9) made of a material with a very high thermal conductivity, i.e. thermal conductivity greater than 100 W/mK, arranged on each side of the periodic cell structure (4). Furthermore, in accordance with this embodiment of the invention, the heat exchanger features forced ventilation means for redirecting the air (5) and circulating it multiple times through the periodic cells (4).

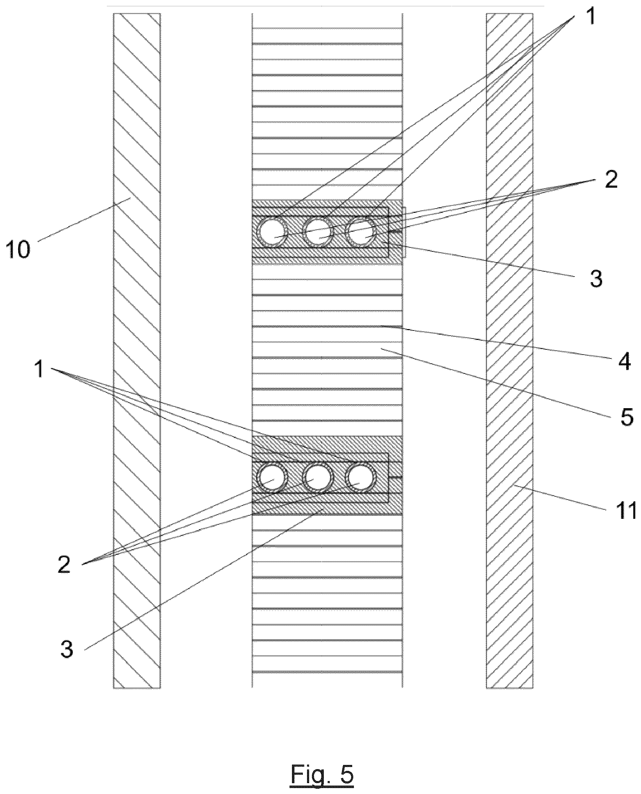

According to another embodiment of the heat exchanger, shown in figure 5, the enclosing means are formed by an outer wall (10) transparent to solar radiation, arranged on one side of the periodic cell structure (4), which will be the one arranged towards the exterior, to receive solar radiation, and an inner wall (11) arranged on the opposite side of the periodic cell structure (4), to absorb the solar radiation that has passed through the transparent outer wall (10) and has not been absorbed by the periodic cell structure (4) and the binder mass (3).

## Claims

1. Heat exchanger, comprising
- at least one coil tube (1), configured for the internal circulation of a heat transfer fluid (2), said coil tube (1) housed in the interior of
- a structure of periodic cells (4) configured for the internal circulation of air (5), the walls of the periodic cells (4) having a thermal conductivity greater than 100 W/mK, and
- enclosing means that house inside the periodic cell structure (4), forming a sandwich-like configuration,
**characterized in that**
- the coil tube (1) is made of plastic,
- the heat exchanger comprises a binder mass (3) which envelops the coil tube (1), contacting said coil tube (1) and the periodic cells (4) and providing a radial heat flow, the binder mass (3) having aggregates of thermal conductivity greater than 25 W/mK, which causes the composite material to have a thermal conductivity greater than 4 W/mK.

2. Heat exchanger according to claim 1, wherein the coil tube (1) has an outer diameter of between 8-12 mm and a thickness of between 0.7-1.5 mm.

3. Heat exchanger according to any one of the preceding claims, wherein the binder mass is selected from cement, resin, and a combination of both.

4. Heat exchanger according to any one of the preceding claims, wherein the aggregates included in the binder mass (3) are selected from silicon carbide, metals, graphite, and graphene.

5. Heat exchanger according to any one of the preceding claims, wherein the walls of the periodic cells (4) are made of a material selected from metallic, beryllium oxide and graphite.

6. Heat exchanger according to any one of the preceding claims, wherein the enclosing means comprises
- a first plate (6) arranged on one side of the periodic cell structure (4),
- and a second plate (7) arranged on the opposite side of the periodic cell structure (4).

7. Heat exchanger according to the preceding claim, wherein first plate (6) has a thermal conductivity greater than 25 W/mK.

8. Heat exchanger according to claim 6, wherein the first plate (6) has a light energy absorption greater than 60% and a thermal emissivity of less than 0.2.

9. Heat exchanger according to any one of the preceding claims, wherein the enclosing means comprises
- a first plate (6) arranged on one side of the periodic cell structure (4),
- and a mass filler (8) with a conductivity of less than 0.5 W/mK inside the periodic cells (4).

10. Heat exchanger according to any one of claims 1 to 5, wherein
- the enclosing means comprising an external box (9) made of a material with a conductivity greater than 25 W/mK arranged on each side of the periodic cell structure (4), and
- the heat exchanger comprises means of forced ventilation configured for redirecting the air (5) and circulating it multiple times through the periodic cells (4).

11. Heat exchanger according to any one of claims 1 to 5, wherein the enclosing means comprises
- an outer wall (10) transparent to solar radiation, arranged on one side of the periodic cell structure (4), and
- an opaque inner wall (11) disposed on the opposite side of the periodic cell structure (4), comprising photovoltaic cells configured to absorb solar radiation that has not been absorbed by the periodic cell structure (4) and the binder mass (3).

## Patentansprüche

1. Wärmetauscher, umfassend
- mindestens ein Spiralrohr (1), das für die interne Zirkulation eines Wärmetransferfluids (2) konfiguriert ist, wobei das Spiralrohr (1) im Inneren von Folgendem aufgenommen ist:
- einer Struktur aus periodischen Zellen (4), die für die interne Zirkulation von Luft (5) konfiguriert ist, wobei die Wände der periodischen Zellen (4) eine Wärmeleitfähigkeit von mehr als 100 W/mK aufweisen, und
- Umschließungsmitteln, die im Inneren die Struktur aus periodischen Zellen (4) aufnehmen, wobei eine sandwichartige Konfiguration gebildet wird, **dadurch gekennzeichnet, dass**
- das Spiralrohr (1) aus Kunststoff besteht,
- der Wärmetauscher eine Bindemasse (3) umfasst, die das Spiralrohr (1) umhüllt, mit dem Spiralrohr (1) und den periodischen Zellen (4) in Kontakt steht und einen radialen Wärmefluss ermöglicht, wobei die Bindemasse (3) Aggregate mit einer Wärmeleitfähigkeit von mehr als 25 W/mK aufweist, was bewirkt, dass das Verbundmaterial eine Wärmeleitfähigkeit von mehr als 4 W/mK aufweist.

2. Wärmetauscher nach Anspruch 1, wobei das Spiralrohr (1) einen Außendurchmesser zwischen 8-12 mm und eine Stärke zwischen 0,7-1,5 mm aufweist.

3. Wärmetauscher nach einem der vorhergehenden Ansprüche, wobei die Bindemasse aus Zement, Harz und einer Kombination aus beiden ausgewählt ist.

4. Wärmetauscher nach einem der vorhergehenden Ansprüche, wobei die in der Bindemasse (3) enthaltenen Aggregate aus Siliciumcarbid, Metallen, Graphit und Graphen ausgewählt sind.

5. Wärmetauscher nach einem der vorhergehenden Ansprüche, wobei die Wände der periodischen Zellen (4) aus einem Material bestehen, das aus Metall, Berylliumoxid und Graphit ausgewählt ist.

6. Wärmetauscher nach einem der vorhergehenden Ansprüche, wobei die Umschließungsmittel Folgendes umfassen:
- eine erste Platte (6), die auf einer Seite der Struktur aus periodischen Zellen (4) angeordnet ist,
- und eine zweite Platte (7), die auf der gegenüberliegenden Seite der Struktur aus periodischen Zellen (4) angeordnet ist.

7. Wärmetauscher nach dem vorhergehenden Anspruch, wobei die erste Platte (6) eine Wärmeleitfähigkeit von mehr als 25 W/mK aufweist.

8. Wärmetauscher nach Anspruch 6, wobei die erste Platte (6) eine Lichtenergieabsorption von mehr als 60 % und eine Wärmeemissivität von weniger als 0,2 aufweist.

9. Wärmetauscher nach einem der vorhergehenden Ansprüche, wobei die Umschließungsmittel Folgendes umfassen:
- eine erste Platte (6), die auf einer Seite der Struktur aus periodischen Zellen (4) angeordnet ist,
- und einen Massenfüller (8) mit einer Leitfähigkeit von weniger als 0,5 W/mK innerhalb der periodischen Zellen (4).

10. Wärmetauscher nach einem der Ansprüche 1 bis 5, wobei
- die Umschließungsmittel eine äußere Box (9) aus einem Material mit einer Leitfähigkeit von mehr als 25 W/mK umfassen, die auf jeder Seite der Struktur aus periodischen Zellen (4) angeordnet ist, und
- der Wärmetauscher Mittel zur Zwangsbelüftung umfasst, die dazu konfiguriert sind, die Luft (5) umzuleiten und mehrfach durch die periodischen Zellen (4) zirkulieren zu lassen.

11. Wärmetauscher nach einem der Ansprüche 1 bis 5, wobei die Umschließungsmittel Folgendes umfassen:
- eine für Sonnenstrahlung durchlässige Außenwand (10), die auf einer Seite der Struktur aus periodischen Zellen (4) angeordnet ist, und
- eine undurchsichtige Innenwand (11), die auf der gegenüberliegenden Seite der Struktur aus periodischen Zellen (4) angeordnet ist, umfassend Photovoltaikzellen, die dazu konfiguriert sind, Sonnenstrahlung zu absorbieren, die nicht von der Struktur aus periodischen Zellen (4) und der Bindemasse (3) absorbiert wurde.

## Revendications

1. Échangeur de chaleur, comprenant
- au moins un tube en serpentin (1), configuré pour la circulation interne d'un fluide caloporteur (2), ledit tube en serpentin (1) étant logé à l'intérieur
- d'une structure de cellules périodiques (4) configurée pour la circulation interne d'air (5), les parois des cellules périodiques (4) présentant une conductivité thermique supérieure à 100 W/mK, et
- des moyens de fermeture qui logent à l'intérieur la structure de cellules périodiques (4), en formant une configuration de type sandwich, **caractérisé en ce que**
- le tube en serpentin (1) est en matière plastique,
- l'échangeur de chaleur comprend une masse liante (3) qui enveloppe le tube en serpentin (1), est en contact avec ledit tube en serpentin (1) et les cellules périodiques (4) et assure un flux thermique radial, la masse liante (3) comportant des granulats présentant une conductivité thermique supérieure à 25 W/mK, ce qui confère au matériau composite une conductivité thermique supérieure à 4 W/mK.

2. Échangeur de chaleur selon la revendication 1, dans lequel le tube en serpentin (1) présente un diamètre extérieur de 8 à 12 mm et une épaisseur de 0,7 à 1,5 mm.

3. Échangeur de chaleur selon l'une quelconque des revendications précédentes, dans lequel la masse liante est choisie parmi le ciment, la résine et une combinaison de ceux-ci.

4. Échangeur de chaleur selon l'une quelconque des revendications précédentes, dans lequel les granulats compris dans la masse liante (3) sont choisis parmi le carbure de silicium, les métaux, le graphite et le graphène.

5. Échangeur de chaleur selon l'une quelconque des revendications précédentes, dans lequel les parois des cellules périodiques (4) sont constituées d'un matériau choisi parmi les métaux, l'oxyde de béryllium et le graphite.

6. Échangeur de chaleur selon l'une quelconque des revendications précédentes, dans lequel les moyens de fermeture comprennent
- une première plaque (6) agencée sur un côté de la structure de cellules périodiques (4),
- et une seconde plaque (7) agencée sur le côté opposé de la structure de cellules périodiques (4).

7. Échangeur de chaleur selon la revendication précédente, dans lequel la première plaque (6) présente une conductivité thermique supérieure à 25 W/mK.

8. Échangeur de chaleur selon la revendication 6, dans lequel la première plaque (6) présente une absorption d'énergie lumineuse supérieure à 60 % et une émissivité thermique inférieure à 0,2.

9. Échangeur de chaleur selon l'une quelconque des revendications précédentes, dans lequel les moyens de fermeture comprennent
- une première plaque (6) agencée sur un côté de la structure de cellules périodiques (4),
- et une masse de remplissage (8) présentant une conductivité inférieure à 0,5 W/mK à l'intérieur des cellules périodiques (4).

10. Échangeur de chaleur selon l'une quelconque des revendications 1 à 5, dans lequel
- les moyens de fermeture comprennent un boîtier externe (9) constitué d'un matériau présentant une conductivité supérieure à 25 W/mK et disposé de chaque côté de la structure de cellules périodiques (4), et
- l'échangeur de chaleur comprend des moyens de ventilation forcée configurés pour rediriger l'air (5) et le faire circuler plusieurs fois à travers les cellules périodiques (4).

11. Échangeur de chaleur selon l'une quelconque des revendications 1 à 5, dans lequel les moyens de fermeture comprennent
- une paroi externe (10) transparente au rayonnement solaire, agencée sur un côté de la structure de cellules périodiques (4), et
- une paroi interne opaque (11) disposée sur le côté opposé de la structure de cellules périodiques (4), comprenant des cellules photovoltaïques configurées pour absorber le rayonnement solaire qui n'a pas été absorbé par la structure de cellules périodiques (4) et la masse liante (3).
